**Europäisches Patentamt**

**European Patent Office**

**Office européen des brevets**

(19)

(11) Veröffentlichungsnummer: **0 184 784**
A1

# (12) EUROPÄISCHE PATENTANMELDUNG

(21) Anmeldenummer: **85115507.7**

(22) Anmeldetag: **06.12.85**

(51) Int. Cl.⁴: **B 23 K 35/30**, B 23 K 11/32, B 23 P 15/32, B 23 B 51/02

(30) Priorität: **14.12.84 DE 3445631**

(43) Veröffentlichungstag der Anmeldung: **18.06.86** **Patentblatt 86/25**

(84) Benannte Vertragsstaaten: **CH DE FR GB IT LI SE**

(71) Anmelder: **HAWERA Präzisionswerkzeuge GmbH, Wangener Str. 133, D-7980 Ravensburg (DE)**

(72) Erfinder: **Gälle, Peter, Karmeliterstrasse 28, D-7980 Ravensburg (DE)**
Erfinder: **Illig, Gert, Illertalring 36, D-7951 Tannheim (DE)**

(74) Vertreter: **Patentanwälte Dipl.-Ing. E. Eisele Dr.-Ing. H. Otten, Seestrasse 42, D-7980 Ravensburg (DE)**

(54) **Verfahren zur Herstellung von Bohrwerkzeugen.**

(57) Es wird ein Verfahren zur Herstellung von Bohrwerkzeugen vorgeschlagen, mit welchem ein Stahlschaft mit einer Hartmetallspirale bzw. einem Hartmetallrohling im Widerstandsschweissverfahren verbunden wird. Die Verbindung beruht insbesondere auf der speziellen Auswahl des Stahlmaterials, des Hartmetallmaterials sowie der besonderen Schweissparameter zur Durchführung des Verfahrens.

EP 0 184 784 A1

**.. 0 184 784**

Anmelderin:     HAWERA Präzisionswerkzeuge GmbH
                Wangener Straße 133
                7980 Ravensburg

amtl. Bez.:     "Verfahren zur Herstellung von
                Bohrwerkzeugen"

Die Erfindung betrifft ein Verfahren zur Herstellung von Bohrwerkzeugen mit einem Stahlschaft und einer Hartmetallspirale.

Bei der Bearbeitung von stark abrassiv wirkenden Glasfaserlaminaten mit einem hohen prozentualen Anteil an Glasfaser sind die Hartmetallbohrwerkzeuge einem hohen Verschleiß unterworfen. Bekannte Bohrwerkzeuge zur Bearbeitung derartiger Glasfaserstoffe weisen einen genormten Schaft mit einem Durchmesser von entweder 3,0 mm oder 3,175 mm = 1/8 Zoll auf. Der genormte gleichbleibende Schaftdurchmesser bei unterschiedlichen Spiraldurchmesser dient zur Aufnahme in genormte Bohrmaschinenfutter. Das Problem bei bekannten Bohrwerkzeugen liegt demnach darin, den Werkzeugschaft aus Stahl mit geeigneten Mitteln bzw. geeigneten Verfahren mit der Hartmetallspirale zu verbinden. Als bekannte Technik wurde hierzu ein Hartlötverfahren entwickelt, welches jedoch in der Anwendung unbefriedigende Ergebnisse lieferte. Auch diverse Schweißversuche konnten kein befriedigendes Ergebnis aufweisen.

Der Erfindung liegt die Aufgabe zugrunde, ein Verfahren vorzuschlagen, mit welchem sich Stahlschäfte und Hartmetallspiralen in höchster Präzision und Festigkeit miteinander verbinden lassen.

Diese Aufgabe wird durch die Kombination der Merkmale des kennzeichnenden Teils des Anspruchs 1 gelöst.

Der Grundgedanke der vorliegenden Erfindung ergibt sich aus der Erkenntnis, daß nur die Kombination der erfindungsgemäßen Merkmale zum gewünschten Ergebnis führt. So ist es zur erfolgreichen Durchführung eines Widerstandsschweißverfahrens zur Verbindung eines Stahlschaftes mit einer Hartmetallspirale bzw. eines Hartmetallrohlings notwendig, daß zum einen sowohl die Stahlsorte als auch die Hartmetallsorte genauestens aufeinander angepaßt sind und daß das Widerstandsscheißverfahren selbst unter bestimmten Voraussetzungen abläuft.

Bei der Auswahl der richtigen Materialien stößt man schon auf die Schwierigkeit, daß es allgemein bekannt ist, daß sich Chrom-Nickelstähle nicht oder nur sehr schlecht mit Hartmetallwerkstoffen verbinden lassen. So behindert beispielsweise ein zu hoher Chromgehalt im Chrom-Nickelstahl eine gute Schweißbarkeit. Umgekehrt muß der Kobalt-Gehalt im Hartmetallwerkstoff ebenfalls eine bestimmte Größenordnung aufweisen, um eine Verbindung zum Stahl zu ermöglichen. Die unterschiedlichen Bestandteile der zu verbindenden Werkstücke wie Chrom, Nickel, Kohlenstoff sowie Kobalt ließen zunächst eine erfolgreiche Durchführung der Verbindung als unmöglich erscheinen.

Erst in der konkreten Auswahl gemäß den Merkmalen des Hauptanspruchs wurde ein Verfahren mit einer Auswahl einer Materialkombination gefunden, die ein Höchstmaß an Qualität des herzustellenden Bohrwerkzeugs bietet.

Erst durch umfangreiche Versuche und hierbei gewonnene neue Erkenntnisse konnte eine ausreichend hohe Festigkeit der Verbindungsstelle im Scherversuch erzielt werden. Weiterhin ergab die Prüfung, daß durch das erfindungsgemäße Verfahren keine grobe Schädigung des Stahlgefüges im Schweißbereich eintritt. Auch konnte man keine negative Reaktionen des Hartmetalls wie Rißbildung o. dgl. durch die zonenweise schnelle Erwärmung feststellen.

Mit der im Unteranspruch 2 aufgeführten Präzisionsspannzange konnte das Schweißverfahren in vereinfachter Weise hergestellt werden.

Die Vorteile des erfindungsgemäßen Verfahrens liegen im überraschenden Ergebnis des angewandten Widerstandsschweißverfahrens.

Das Verfahren eignet sich dabei insbesondere für Spiraldurchmesser die größer sind als der gleichbleibende Durchmesser des Schaftes. Hierdurch kann für den Schaftbereich das teuere Hartmetall-Material eingespart werden.

Die Erfindung ist anhand des nachfolgenden Ausführungsbeispiels näher erläutert.

Für die Erfindung wesentlich ist die richtige Auswahl der zu verbindenden Werkstoffe, d. h. die richtige Auswahl des Stahls und des Hartmetall-Werkstoffes.

Als Stahl wird ein Chrom-Nickelstahl nach DIN 14 305 verwendet. Dieser Stahl hat einen Chromanteil von 17 bis 19 %, einen Nickelanteil von 8 bis 10 % sowie einen Kohlenstoffanteil von ca. 0,1 %.

Der Chromanteil im Stahl dient der Rostbeständigkeit, er darf jedoch wegen der schlechten Verbindungseigenschaften nicht zu hoch sein. Die untere Grenze dürfte etwa bei 12 % liegen.

Der Nickelanteil im Stahl wird so hoch gewählt, daß der Stahl besser schweißbar wird, d. h. die schlechte Verbindbarkeit des Chroms wird wieder kompensiert. Als Nickelanteil wird vorzugsweise 8 bis 10 %, jedoch auch bis 12 % vorteilhaft sein.

**0 184 784**

Der Kohlenstoffanteil im Chrom-Nickelstahl wird derart gewählt, daß das Material noch härtbar ist. Hierzu reicht ein Kohlenstoffanteil von ca. 0,1 % aus.

Anstelle des zuvor genannten Stahls nach DIN 14 305 eignet sich insbesondere auch der Automatenstahl nach DIN AP 20.

Wie schon die Auswahl der Stahlsorte für den Stahlschaft, so muß auch der Hartmetallwerkstoff ganz erfindungsspezifisch angepaßt werden um ein gutes Schweißergebnis und damit eine gute Werkzeugqualität zu erhalten. Umfangreiche Versuche und Überlegungen haben ergeben, daß sich die Hartmetallsorte nach DIN K10 besonders eignet. Hier ist insbesondere ein Kobaltanteil von 5 bis 6 % notwendig, um die ausreichende Zähigkeit des Hartmetalls zu gewährleisten und die Verbindbarkeit zum Stahl zu ermöglichen.

Das Schweißverfahren zur Verbindung des ausgewählten Stahlschaftes mit dem Hartmetall, welches zunächst nicht als Spirale sondern als Rohling, d. h. unbearbeitet vorliegt, bedarf ebenfalls grundlegender Überlegungen und Erkenntnissen.

Die Schweißparameter zur Durchführung des Widerstandsschweißverfahrens müssen derart präzise und exakt eingehalten werden, daß dies nur mit einer elektronischen Steuerung über einen Mikrocomputer möglich ist.

0 184 784

Vor der Schweißung werden die zu verschweißenden Teile in eine Präzisionshalterung eingesetzt, die beispielsweise aus einem Kupferwürfel mit einer Kantenlänge von 40 mm besteht, in welchem das Stahlstaftteil festgespannt wird. Darüber wird eine elektrisch nicht leitende, gleichgroße Abdeckplatte mit Bohrung montiert, mit welcher das Hartmetallteil beim Schweißvorgang mit einem vorgegebenen Andruck dem im Kupferwürfel gespannten Stahlschaft zugeführt wird.

Für die Schweißsteuerung ist es dabei wesentlich, daß ein prozentualer Fasenanschnitt des Wechselstromes erfolgt, wobei Ober- und Unterwelle getrennt dosiert werden. Zusätzlich erfolgt eine Regelung der Stromgröße durch Spannungsänderung sowie eine exakte Zeitsteuerung des Schweißvorganges durch elektronisches Zählen der Wechselstromperioden. Dabei wird die Vorheizzeit, die Pause sowie die Schweißzeit in Wechselstromperioden gemessen und geregelt. Das Verhältnis von Vorheizzeit zu Pause zur Schweißzeit verhält sich wie 5 : 3 : 10. Dabei läuft der komplette Schweißzyklus mit Vorheizzeit, Pause, Schweißzeit und Nachdruckzeit innerhalb einer Schweißzykluszeit von nur 0,3 bis 0,4 sec. ab.

Ein optimales Schweißergebnis wird erzielt, wenn die Schmelzzone des Stahlteils im Bereich von 0,1 bis 0,15 mm Länge liegt und die gewählte Stromgröße und die Schweißzeit so abgestimmt sind, daß ein Verspritzen des fließenden Stahls vermieden wird. Dies wird

**0 184 784**

durch eine spätere Festigkeitsprüfung bestätigt. Der Andruck beim Schweißvorgang liegt in der Größenodnung von 70 bis 90 N. Die Schweißung wird unter Schutzgas "Argon" ausgeführt, welches in die Vorrichtung eingeblasen wird.

Die Nachdruckphase findet ebenfalls mit einem Druck von ca. 70 bis 90 N bei einer Nacherwärmung von ca. 500 bis 600° und einer Nachdruckzeit von ca. 0,2 sec. statt.

Gemäß der Erfindung wird es erstmals möglich, Stahlschäfte mit Hartmetall derart zu verbinden, daß Bohrer mit einer Spiralgröße von mehr als 3 mm mit einer ausreichenden Festigkeit und Genauigkeit hergestellt werden können. Selbstverständlich kann das erfindungsgemäße Verfahren auch für Bohrer mit kleinerem Durchmesser der Hartmetallspirale angewandt werden.

Die Erfindung beschränkt sich insbesondere nicht auf das Ausführungsbeispiel sondern umfaßt alle fachmännischen, nicht selbständig erfinderischen Weiterbildungen.

**0 184 784**

A N S P R Ü C H E

1.     Verfahren zur Herstellung von Bohrwerkzeugen mit einem Stahlschaft und einer Hartmetallspirale bzw. einem Hartmetallrohling zur Herstellung einer Spirale, dadurch gekennzeichnet, daß der Stahlschaft mit dem Hartmetall im Widerstandsschweißvefahren verbunden wird, unter Verwendung folgender Merkmalskombination:

- der Stahlschaft besteht aus einem Chrom-Nickelstahl mit einem Chromanteil von vorzugsweise 17 bis 19 % oder weniger, mit einem Nickelanteil von vorzugsweise 8 bis 10 % oder mehr und einem Kohlenstoffanteil von vorzugsweise 0,1 %;

- das Hartmetall nach DIN K10 weist einen Mindestanteil an Kobalt von vorzugsweise 5 bis 6 % auf;

- der Schweißvorgang besteht aus einer Vorheizphase, einer Pause, einer Schweißphase und einer Nachdruckphase, wobei die Einhaltung einer sehr kurzen Schweißzykluszeit von 0,3 bis 0,4 sec. mittels eines Mikroprozessors mit Selbstüberwachung von Wechselstromperioden erfolgt;

- die Aufschmelzzone des Stahlschafts liegt im Bereich von 0,1 bis 0,15 mm;

**0 184 784**

- der Anpreßdruck in der Schweißperiode sowie in der Nachdruckperiode beträgt ca. 70 bis 90 N;

- der Schweißvorgang wird unter Schutzgas Argon ausgeführt.


2.      Verfahren nach Anspruch 1, dadurch gekennzeichnet, daß
die zu verbindenden Werkstücke aus Stahl und Hartmetall in einer
Präzisionsspannvorrichtung gehalten werden, wobei das Stahlschaftteil in einem Kupferwürfel festgespannt wird, über welchem
eine nicht leitende gleichgroße Abdeckplatte mit Bohrung montiert
ist, die das Hartmetall-Teil trägt.


3.      Verfahren nach Anspruch 1 oder 2, dadurch gekennzeichnet,
daß die Vorheizperiode ca. 0,1 sec. beträgt, mit einer Aufheizung
des Stahls in den teigigen Zustand, daß die Pausenperiode ca.
0,06 sec. und die Schweißzeit ca. 0,2 sec. bei einem Anpreßdruck
von ca. 80 N beträgt.

| | EINSCHLÄGIGE DOKUMENTE | | EP 85115507.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | AT - B - 359 353 (UNION CARBIDE CORPORATION)<br><br>* Fig.; Anspruch 3 *<br><br>-- | 1 | B 23 K 35/30<br><br>B 23 K 11/32<br><br>B 23 P 15/32<br><br>B 23 B 51/02 |
| A | DE - A1 - 3 004 758 (THE JAPAN STEEL WORKS LTD; CHIYODA CHEMICAL ENGINEERING & CONSTRUCTION CO., LTD.)<br><br>* Anspruch 4 *<br><br>-- | 1 | |
| A | DE - A1 -3 216 456 (ROBERT BOSCH GMBH)<br><br>* Zusammenfassung; Ansprüche 1,5,6; Seite 5, letzte Zeile *<br><br>-- | 1 | |
| A | DE - A1 - 3 219 260 (LAWTON GMBH & CO. KG)<br><br>* Zusammenfassung; Anspruch 11; Fig. 3-5 *<br><br>-- | 1,2 | RECHERCHIERTE SACHGEBIETE (Int. Cl.4)<br><br>B 23 K<br><br>B 23 P<br><br>B 23 B |
| A | DE - C - 398 071 (SIEMENS-SCHUCKERTWERKE G.M.B.H.)<br><br>* Fig. 1 *<br><br>-- | 1,2 | |
| A | EP - A1 - 0 118 035 (G. GÜHRING)<br><br>* Ansprüche, insbesonders Anspruch 9 *<br><br>---- | 1 | |

Der vorliegende Recherchenbericht wurde für alle Patentansprüche erstellt.

| Recherchenort | Abschlußdatum der Recherche | Prüfer |
|---|---|---|
| WIEN | 05-03-1986 | SLAMA |